# EUROPEAN PATENT SPECIFICATION

(11) **EP 1 269 330 B1**
(45) Date of publication and mention of the grant of the patent: **24.03.2004**
(21) Application number: 00980619.1
(22) Date of filing: 21.11.2000
(51) Int. Cl.: G06F 13/18, G06F 13/40

(54) **BUS BRIDGE INCLUDING A MEMORY CONTROLLER HAVING AN IMPROVED MEMORY REQUEST ARBITRATION MECHANISM**
BUSBRÜCKE MIT EINER SPEICHERSTEUERUNG MIT VERBESSERTEM SPEICHERANFORDERUNGSARBITRIERUNGSMECHANISMUS
PONT DE BUS COMPRENANT UNE UNITE DE COMMANDE DE MEMOIRE POURVUE D'UN MECANISME D'ARBITRAGE DE REQUETE DE MEMOIRE AMELIORE

(30) Priority: 03.04.2000 US 541234
(43) Date of publication of application: 02.01.2003
(73) Proprietor: ADVANCED MICRO DEVICES INC., Sunnyvale, California 94088-3453 (US)
(72) Inventor: NOVAK, Steve, Agoura, CA 91301 (US)
(74) Representative: Wright, Hugh Ronald
(86) International application number: PCT/US2000/031963
(87) International publication number: WO 2001/075620

(56) References cited:
- EP-A- 0 391 517
- EP-A- 0 924 621
- US-A- 5 638 534
- US-A- 5 745 913

## Description

### BACKGROUND OF THE INVENTION

### 1. Technical Field

This invention relates to computer systems and, more particularly, to arbitration mechanisms employed within memory controllers.

### 2. Background Art

Computer systems typically include a plurality of devices that are interconnected by one or more buses. For example, many conventional computer systems comprise a processor that is coupled to a main memory through a bus bridge. The bus bridge may be coupled to various peripheral devices, such as network interface cards, video accelerators, audio cards, SCSI adapters, telephony cards, etc. through a high bandwidth local expansion bus, such as the Peripheral Component Interconnect (PCI) bus. The bus bridge may further be coupled to a graphics controller through a second expansion bus, such as an Advanced Graphics Port (AGP) bus.

The bus bridge may further include a memory controller. A memory controller receives various requests to read from or write to the main memory. The memory controller may receive these incoming requests from various sources, such as the processor or a peripheral connected through one of the expansion buses. Internally, the bus bridge may include a processor bus interface, a PCI bus interface and an AGP bus interface to provide appropriate interfaces to the memory controller.

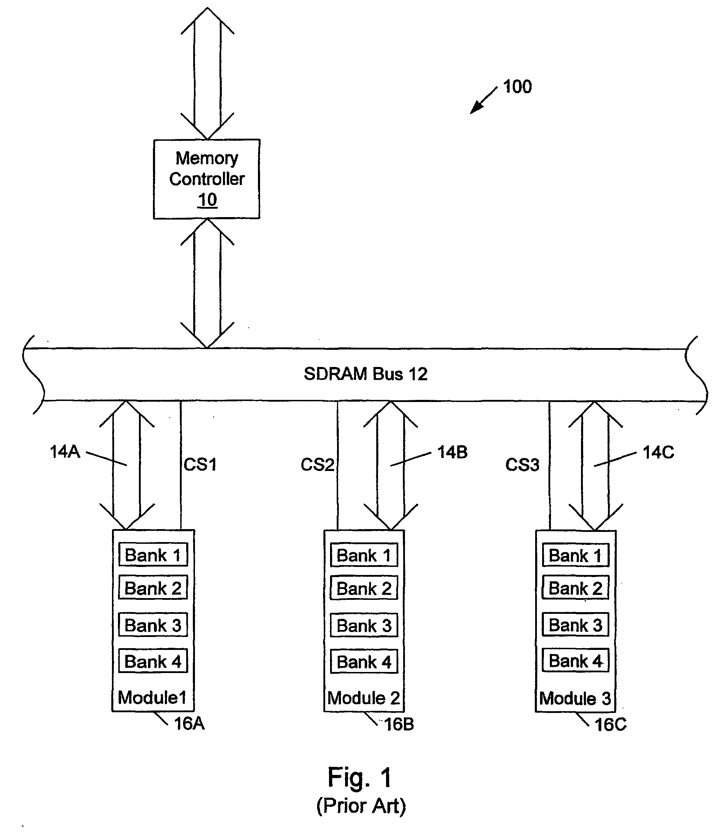

In some implementations, the main memory may be implemented using synchronous dynamic random access memory (SDRAM). Figure 1 illustrates an exemplary memory subsystem 100 including a memory controller 10 coupled to a plurality of SDRAM modules 16A-C through SDRAM bus 12. The plurality of SDRAM modules 16A-C are connected to SDRAM bus 12 through memory expansion slots designated as 14A-C. Each SDRAM module illustratively includes a plurality of banks (i.e., denoted Bank 1- Bank 4). Each bank includes a plurality of pages. Memory controller 10 receives a memory access address that dictates which page will be accessed in a given bank within a given module. The access address determines which chip select signal, CS1-3, will be asserted in order to select the particular module that contains the page and bank to be accessed.

Prior to reading from or writing to a particular location in the SDRAM, the page in which the particular location resides must be activated or opened. A page is opened by an activation cycle initiated by memory controller 10 on SDRAM bus 12. After the page is opened, the read or write is performed by a read/write cycle initiated by memory controller 10. Since two pages in a given bank cannot be opened simultaneously, prior to opening a given page, another page in the bank may need to be closed. The memory controller 10 closes a page by initiating a precharge cycle on SDRAM bus 12.

The latency for servicing a particular read or write request depends upon the state of memory subsystem 100 when a corresponding SDRAM cycle(s) (e.g. read/write cycle, activation cycle, and precharge cycle) is driven by memory controller 10 on SDRAM bus 12. For example, consider a situation in which memory controller 10 receives a request to read from or write to an active page in a particular bank.

Since the page is already active, memory controller 10 initiates only a read/write cycle to read from or write to the selected page. A request to a page that is already active is commonly referred to as a page hit request Page hit requests have the lowest latency since only one cycle is initiated by memory controller 10.

Alternatively, memory controller 10 may receive a request to open a page in a bank that has no activated page. The selected page is opened or activated by an activation cycle initiated by memory controller 10. A read/write cycle is then initiated by memory controller 10 to read from or write to the open page. A request to open a page in a bank that has no activated page is commonly referred to as a page miss bank request Page miss bank requests have the second lowest latency because two separate cycles are initiated by memory controller 10.

Alternatively, memory controller 10 may receive a request to open a page in a different module. In what is commonly referred to as a one cycle turnaround bubble, the currently active module is first deselected and then the module that contains the page to be accessed is selected. A one cycle turnaround bubble is necessitated to ensure that the two modules, i.e. the deselected and selected modules, are not driving SDRAM bus 106 simultaneously. After the proper module is selected, the selected page is opened by an activation cycle. A read/write cycle is then initiated to read from or write to the open page. A request to open a page in a different module is commonly referred to as a page miss-different chip select request. Page miss-different chip select requests have the third lowest latency because of the one cycle turnaround bubble and the two separate cycles that are initiated by memory controller 10.

Alternatively, memory controller 10 may receive a request to open a page not active in an already active bank. The currently active page is closed or deactivated by a precharge cycle initiated by memory controller 10. The selected page is then opened or activated by an activation cycle. A separate cycle, the read/write cycle, is then initiated to read from or write to the open page. A request to open a page not active in an already active bank is commonly referred to as a page conflict request. Page conflict requests have the longest latency because three separate cycles are initiated by memory controller 10.

In some applications, memory controller 10 may be configured such that incoming requests are serviced in order of receipt. A disadvantage of memory controller 10 servicing requests in order of receipt is that a request that may have been categorized as one particular type of request may become categorized as a different type of request that has a longer latency. For example, if memory controller 10 receives a page conflict request followed by three consecutive page hit requests and services them in order of receipt, then memory controller 10 first services the page conflict request. However, after servicing the page conflict request, the page hit requests may become page conflict requests. Memory controller 10 services a page conflict request by initiating a precharge cycle to close the current page and initiating an activation cycle to activate the selected page followed by initiating a read/write cycle. However, the selected page that is opened is a different page than the page requested by the page hit requests. The page hit requests may subsequently become page conflict requests. That is, the former page hit requests may request to read from or write to a formerly active page that is no longer active. The current page may then have to be closed and a new page activated increasing the time to service the requests. A memory controller 10 servicing incoming requests in order of receipt may not optimally utilize the memory bus. Therefore it is desirable to access the SDRAM more efficiently.

### DISCLOSURE OF INVENTION

The problems outlined above may in large part be solved by a bus bridge including a memory controller having an improved memory request arbitration mechanism. In one embodiment, a bus bridge comprises a memory controller coupled to a main memory through a memory bus. The bus bridge may further comprise a processor bus interface and a first peripheral bus interface both coupled to the memory controller. The processor bus interface provides an interface between the memory controller and a processor. The first peripheral bus interface provides an interface between the memory controller and the first peripheral bus.

The memory controller receives various requests to read from or write to the main memory. The memory controller may receive these incoming requests from the processor bus interface and the first peripheral bus interface. In a particular embodiment, the memory controller is configured to accept and arbitrate among these incoming requests. The memory controller may be configured to categorize these incoming requests into a page hit request, a page miss bank request and a page miss-different chip select request. A page hit request has the lowest latency because the page requested is already active. However, the page miss bank request has a longer latency than the page hit request because an activation cycle is required to open the selected page followed by a read/write cycle to read from or write to the selected page. The page miss-different chip select request has a longer latency than the page hit and page miss bank request because there is a one cycle turnaround bubble followed by an activation and read/write cycle. The memory controller may be configured to prioritize these requests based on latency. Subsequently, the page hit request has a higher arbitration priority than page miss bank and page miss different chip-select request Page miss bank request has a higher arbitration priority than page miss different chip-select request The memory controller will then service those requests with a higher arbitration priority than those requests with a lower arbitration priority and hence may improve the utilization of the memory bus, such as an SDRAM bus.

In another particular embodiment, the memory controller may accept and arbitrate among an additional incoming request such as a page conflict request. A page conflict request has a longer latency than the page hit, page miss bank and page miss-different chip select request because the memory controller initiates a precharge, activation and read/write cycle. Consequently, the memory controller may be further configured to provide the page miss-different chip select request a higher arbitration priority than the page conflict request The memory controller will then service those requests with a higher arbitration priority than those requests with a lower arbitration priority and hence may improve the utilization of the memory bus, such as an SDRAM bus.

In another particular embodiment, the memory controller may be configured to prevent the servicing of page hit requests repeatedly at the exclusion of servicing requests with a lesser priority. The memory controller includes a programmable logic unit which limits the number of page hit requests serviced consecutively from one to thirty-two. The programmable logic unit includes a register configured to store the page hit limit and a counter coupled to the register. The counter is configured to count the number of priority hits that were serviced by the memory controller consecutively.

### BRIEF DESCRIPTION OF DRAWINGS

Other objects and advantages of the invention will become apparent upon reading the following detailed description and upon reference to the accompanying drawings in which:
Figure 1 illustrates an exemplary memory subsystem.
Figure 2 is a block diagram of one embodiment of a computer system including a bus bridge.
Figure 3 is a block diagram of one embodiment of a bus bridge.
Figure 4 is a block diagram of one embodiment of a memory controller.
Figure 5 is a block diagram of one embodiment of a priority logic block of the arbiter of Figure 4.
Figure 6 is a block diagram of one embodiment of the categorizing logic of the categorizing multiplexer of Figure 5.
Figure 7 illustrates one embodiment of the prioritizing logic of the priority select multiplexer of Figure 5.
Figure 8 illustrates one embodiment of a scheduler in a memory controller.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the invention is to cover all modifications, equivalents and alternatives falling within the spirit and scope of the present invention as defined by the appended claims.

### MODE(S) FOR CARRYING OUT THE INVENTION

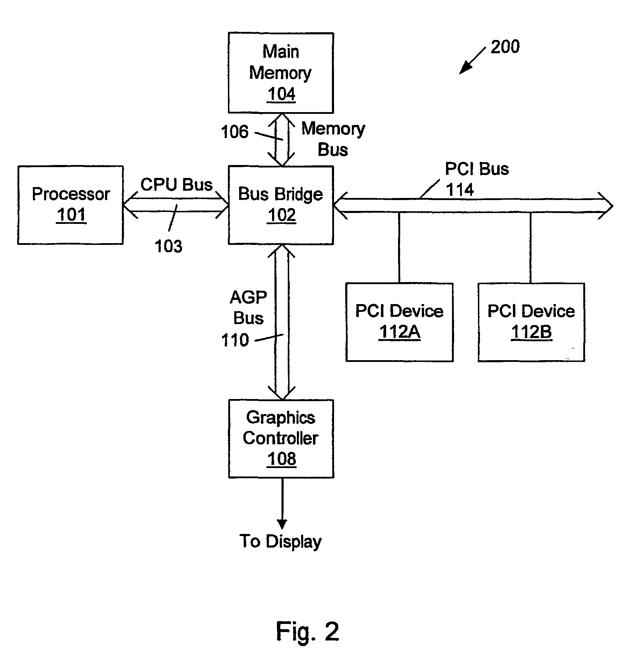

Figure 2 illustrates one embodiment of a computer system. Computer system 200 includes a processor 101 coupled to a variety of system components through a bus bridge 102. In computer system 200, a main memory 104 is coupled to bus bridge 102 through a memory bus 106. A graphics controller 108 is coupled to bus bridge 102 through an AGP bus 110. Furthermore, a plurality of PCI (Peripheral Component Interconnect) devices 112A-112B are coupled to bus bridge 102 through a PCI bus 114.

Processor 101 is illustrative of, for example, an Athlon™ Microprocessor. It is understood, however, that in other embodiments of computer system 200, alternative types of microprocessors may be employed. In other embodiments, an external cache unit (not shown) may further be coupled to processor 101.

Bus bridge 102 provides an interface between processor 101, main memory 104, graphics controller 108, and devices attached to PCI bus 114. When an operation is received from one of the devices connected to bus bridge 102, bus bridge 102 routes the operation to the targeted device. Bus bridge 102 generally translates an operation from the protocol used by the source device or bus to the protocol used by the target device or bus.

Main memory 104 is a memory in which application programs and data are stored. Processor 101 executes primarily out of main memory 104. In one embodiment, main memory 104 may be dynamic random access memory (DRAM) or preferably, in other embodiments, main memory 104 may be synchronous dynamic random access memory (SDRAM).

PCI devices 112A-112B are illustrative of a variety of peripheral devices such as, for example, network interface cards, video accelerators, audio cards, hard or floppy disk drives, small computer systems interface (SCSI) adapters and telephony cards. Similarly, industry standard architecture (ISA) device 118 is illustrative of one of a variety of peripheral devices such as a modem, a sound card, and a variety of data acquisition cards such as general purpose interface bus (GPIB) or field bus interface cards.

Graphics controller 108 is provided to control the rendering and images for a display device. Graphics controller 108 may embody a typical graphics accelerator generally known in the art to render three-dimensional data structures which can be effectively shifted into and out of main memory 104. Graphics controller 108 may therefore be a master of AGP bus 110 in that it can request and receive access to a target interface within bus bridge 102 and thereby obtain access to main memory 104.

It is noted that while AGP bus 110 and PCI bus 114 have been used as examples in the above description, any peripheral bus standard may be used. As will be described in more detail below, bus bridge 102 may receive requests from CPU bus 103, PCI bus 114 and AGP bus 110 to read from or write to main memory 104. Bus bridge 102 may categorize these requests according to a prioritization scheme which takes into account the priority of each request relative to each other request and the state of main memory 104 at the time of the request. In this manner, bus bridge 102 may advantageously optimize the utilization of the bandwidth of memory bus 106, thus increasing overall performance of the computer system.

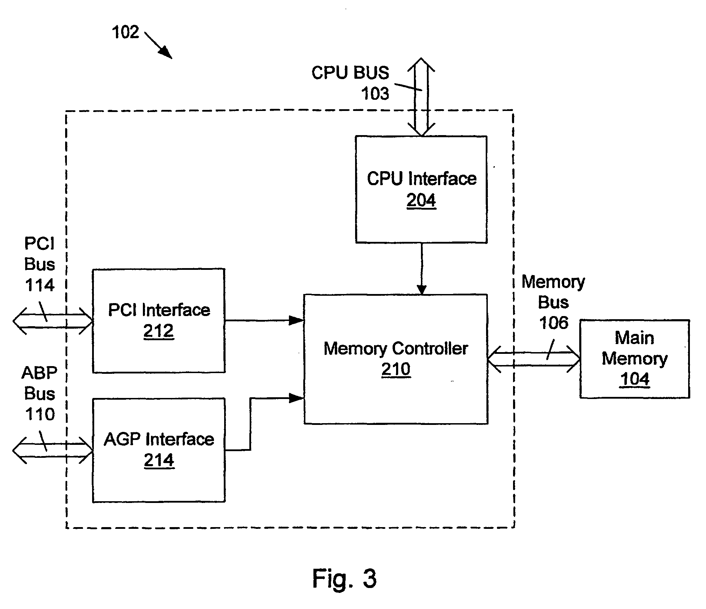

Referring to Figure 3, one embodiment of a bus bridge is illustrated. Circuit components that correspond to those shown in FIG. 2 are numbered identically for simplicity and clarity. Bus bridge 102 includes a CPU interface 204, a PCI interface 212, an AGP interface 214 and a memory controller 210. Memory controller 210 is coupled to CPU interface 204, PCI interface 212 and AGP interface 214. Memory controller 210 is also coupled to a main memory 104 through memory bus 106. It is noted that the components of bus bridge 102 may be embodied on a single integrated circuit chip or they may be embodied within other components of computer system 200 of Figure 2.

As described further below, memory controller 210 uses a plurality of queues as a request buffering mechanism. The queues are configured to receive requests from CPU bus 103, PCI bus 114 and AGP bus 110 through CPU interface 204, PCI interface 212 and AGP interface 214, respectively.

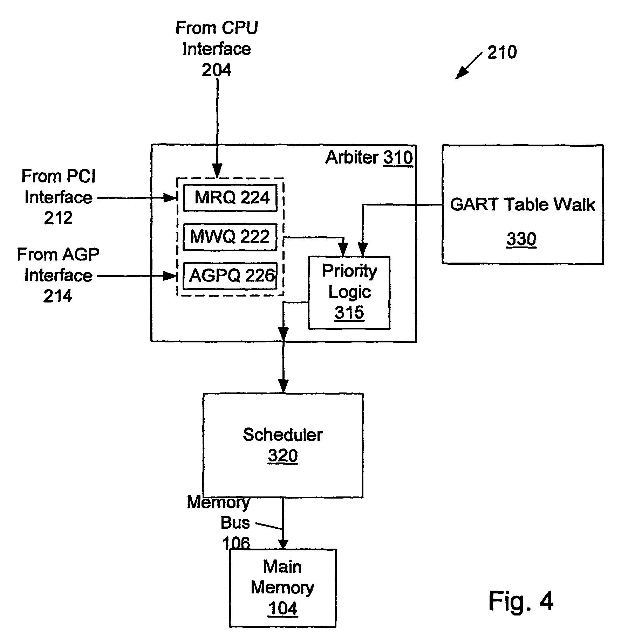

Referring now to Figure 4, a block diagram of one embodiment of a memory controller is shown. Circuit components that correspond to those shown in Figure 2 and Figure 3 are numbered identically for simplicity and clarity. Memory controller 210 comprises an arbiter 310 which is coupled to a scheduler 320 and a graphics address remapping table (GART) table walk 330. Arbiter 310 is also coupled to CPU interface 204, PCI interface 212 and AGP interface 214. Scheduler 320 is coupled to main memory 104 through memory bus 106.

Arbiter 310 includes a memory read queue (MRQ) 224, a memory write queue (MWQ) 222, an advanced graphics port queue (AGPQ) 226 and a priority logic block 315. Arbiter 310 may be configured to receive external memory requests from CPU interface 204, PCI interface 212 and AGP interface 214. Arbiter 310 may also be configured to receive one internal memory request from GART table walk 330 and one bypass request (BYP). The external requests are stored in one of MRQ 224, MWQ 224 or AGPQ 226. MRQ 224 stores requests to read from main memory 104. MWQ 222 stores requests to write to main memory 104 and AGPQ 226 stores requests to read from or write to main memory 104. It is noted that in one particular embodiment, MRQ 224 may be embodied in four separate buffers to accommodate up to four memory read requests. It is described here as one queue for the sake of simplicity. The size of MWQ is one entry and the size of AGPQ is one entry. It is noted however that in various other embodiments, the sizes of MRQ 224, MWQ 222 and AGPQ 226 may be different. Once the requests are in their respective queues, they are then categorized further depending on the state of main memory 104. Priority logic block 315 selects and presents one of the requests to scheduler 320 according to a fixed priority which is described further below. Scheduler 320 then schedules the request, either read or write, onto memory bus 106.

In this particular embodiment, main memory 104 is embodied in SDRAM. As described above, SDRAM accesses typically occur in page mode. These page mode accesses may be categorized into page hit requests (PH), page miss bank requests (PMb), page miss different chip select requests (PMc) and page conflict requests (PC). The priority given to the requests is based on the latency associated with each type of request.

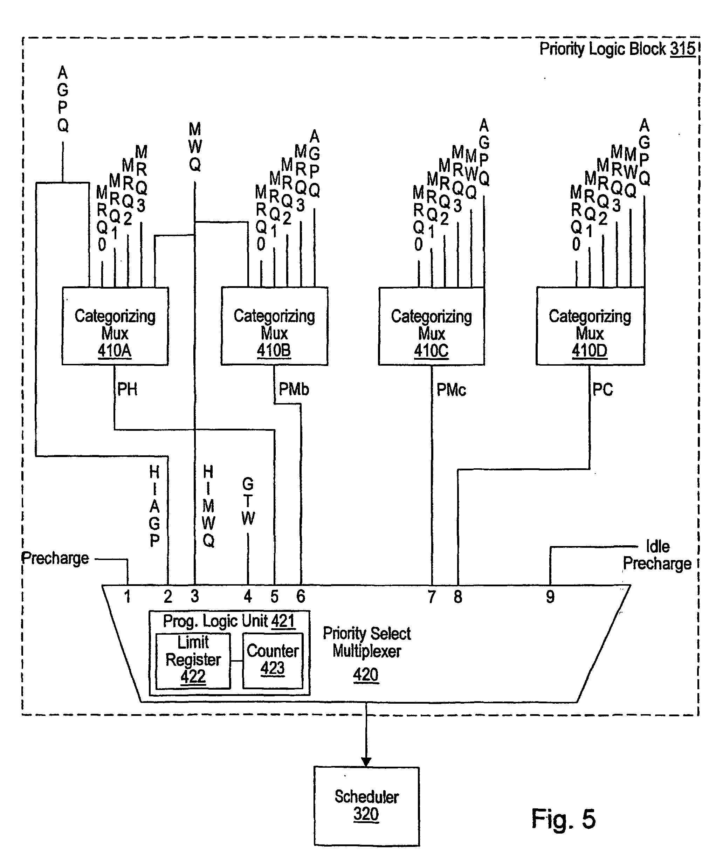

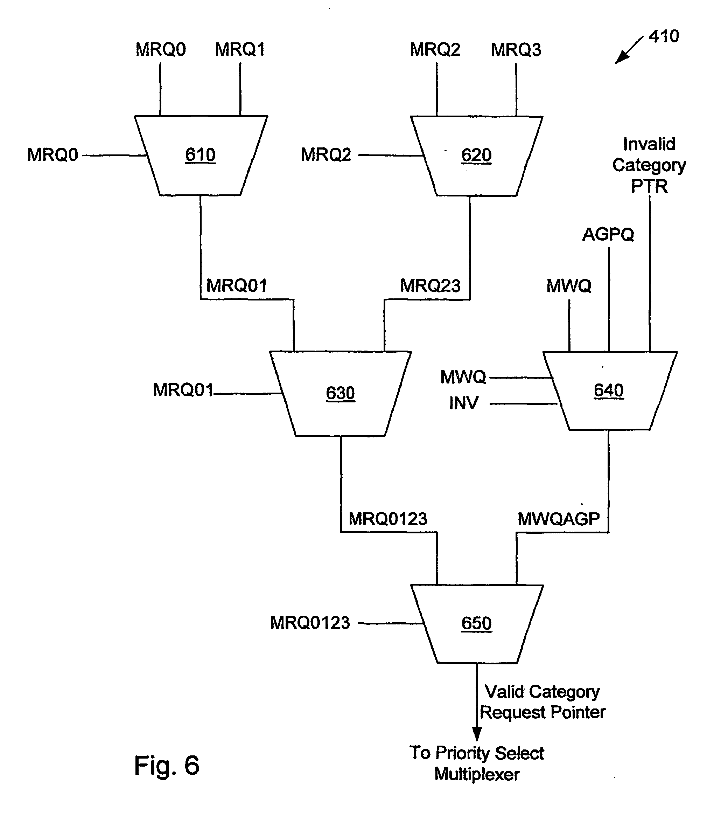

Turning now to Figure 5, a block diagram of one embodiment of a priority logic block of arbiter 310 of Figure 4 is shown. Circuit components that correspond to those shown in Figure 4 are numbered identically for simplicity and clarity. Priority logic block 315 includes categorizing multiplexers 410A, 410B, 410C and 410D which use combinational logic to categorize a plurality of requests received from MRQ 224, MWQ 222 and AGPQ 226 of Figure 4 into the four categories described above: page hit (PH), page miss bank (PMB), page miss-different chip select (PMC) and page conflict (PC). For this discussion, categorizing multiplexers 410A, 410B, 410C and 410D may each be referred to as categorizing multiplexer 410. It is noted that in other embodiments, there may be additional or fewer number of categorizing multiplexers 410 depending on the number of categories. Categorizing multiplexers 410 are configured to select one request from each category, (e.g. PH, PMb, PMc and PC), based on a categorizing scheme as illustrated in Figure 6. The outputs of categorizing multiplexers 410 are input to a priority select multiplexer 420.

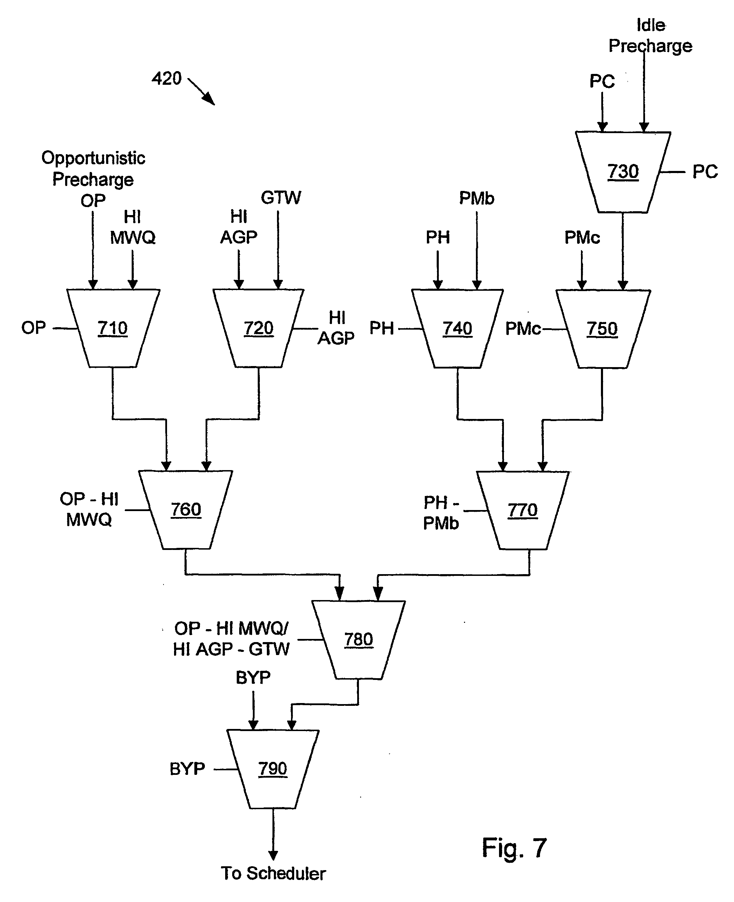

Priority select multiplexer 420 selects the next request to be scheduled to scheduler 320. Priority select multiplexer 420 selects from the following external/internal requests: an opportunistic precharge (OP), a high priority request from AGP interface 214 (Hi AGP), a high priority memory write request(Hi MWQ), an internal request from Gart Table Walk (GTW) 330 as well as the four categorized requests (PH, PMb, PMc, PC) from categorizing multiplexers 410, and an internal idle precharge signal. Once the requests are prioritized, priority select multiplexer 420 is configured to pass the one highest priority request to scheduler 320. The priority selection method described below in the description of Figure 7.

Priority select multiplexer 420 prioritizes the output requests from categorizing multiplexers 410 (e.g. PH's, PMb's, PMc's and PC's) based on the latency exhibited by these requests. As stated earlier, PH requests receive a higher arbitration priority over PMb, PMc and PC requests. However, to prevent starvation of service to requests with a lesser priority, priority select multiplexer 420 may be configured to stop servicing PH requests when a predetermined limit is reached. Priority select multiplexer 420 may include a programmable logic unit 421 which limits the number of page hit requests serviced consecutively from one to thirty-two. Programmable logic unit 421 includes a limit register 422 configured to store the PH request limit and a counter 423 coupled to limit register 422. Counter 423 is configured to count the number of priority hits that were serviced by scheduler 320 consecutively. Once counter 423 reaches the programmable limit, priority select multiplexer 420 may select a different request, for example, a PMb or a PMc. Counter 423 will then be reset to zero and will begin recounting the number of priority hits serviced by scheduler 320 consecutively.

Referring to Figure 6, a block diagram of one embodiment of the categorizing logic of the categorizing multiplexer of Figure 5 is shown. Circuit components that correspond to those shown in Figure 5 are numbered identically for simplicity and clarity. Categorizing multiplexer 410 uses combinational logic comprising a plurality of multiplexers to select the highest priority request. It is noted that other embodiments may use other logic blocks and configurations.

Categorizing multiplexer 410 also includes an internal signal to indicate that neither AGPQ request nor MWQ request is valid. This internal request is called an invalid category pointer (INV). Requests from memory read queue 0 (MRQ0), are given the highest priority; whereas, INV is given the lowest priority. Multiplexer 610 provides requests from MRQ0 a higher priority than requests from memory read queue 1, MRQ1. Multiplexer 620 provides requests from memory read queue 2, MRQ2, a higher priority than requests from memory read queue 3, MRQ3. Multiplexer 630 provides requests from MRQ0 and MRQ1 a higher priority than requests from MRQ2 and MRQ3. Multiplexer 640 provides requests from MWQ, a higher priority than requests from AGPQ. Multiplexer 640 further provides requests from AGPQ a higher priority than invalid category pointer. Multiplexer 650 provides requests from MRQ0-3, a higher priority than requests from MWQ and AGPQ. The output of categorizing multiplexer 410 is a valid category request pointer for input into priority select multiplexer 420 of Figure 4.

Turning now to Figure 7, one embodiment of the prioritizing logic of priority select multiplexer 420 of Figure 5 is illustrated. The combinational logic of priority select multiplexer 420 comprises a plurality of two input multiplexers. It is noted that in other embodiments, other logic configurations may be used. Priority select multiplexer 420 assigns its incoming requests a priority from highest to lowest as follows: bypass (BYP), OP, Hi MWQ, Hi AGP, GTW, PH, PMb, PMc, PC and idle precharge.

Multiplexer 710 gives OP a higher priority than Hi MWQ. Multiplexer 720 gives Hi AGP a higher priority than GTW. Multiplexer 730 gives PC a higher priority than idle precharge. Multiplexer 740 gives PH a higher priority over PMb. Multiplexer 750 gives PMc a higher priority than both PC and Idle Precharge. Multiplexer 760 gives Precharge and Hi MWQ a higher priority than Hi AGP and GTW. Multiplexer 770 gives PH and PMb a higher priority than PMc, PC and Idle Precharge. Multiplexer 780 gives Precharge, Hi MWQ, Hi AGP and GTW a higher priority than PH, PMB, PMC, PC and idle precharge. Multiplexer 790 gives Bypass the highest priority. The output of multiplexer 790 is the selected request sent to scheduler 320.

As described in more detail below, the BYP request is issued only when there are no current valid chip selects. This may occur when memory controller 210 is completely idle. Since no chip select signal is currently valid, a PMc request will be treated as a PMb request. Whenever a BYP request is accepted, the BYP request may pass directly through scheduler 320 of Figure 5 and onto the memory bus 106 of Figure 4 in one cycle.

BYP is given highest priority since the request may be placed on memory bus 106 in one cycle. However, the instances in which memory controller is completely idle may be rare. The OP request is given second highest priority of all other requests. OP is issued only one cycle after an 8 quad word PH or PMb request has been accepted to reduce the probability that a PC request will occur. The idle precharge request is issued when no new valid requests have been presented to arbiter 310 for more than a programmable number of cycles and therefore it is given the lowest priority of all requests.

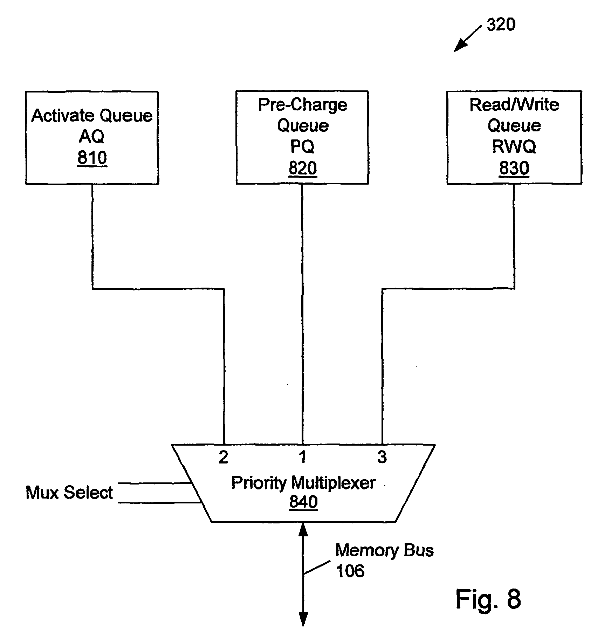

Figure 8 illustrates one embodiment of scheduler 320 of Figure 5. Circuit components that correspond to those shown in Figures 2 through 7 are numbered identically for simplicity and clarity. Scheduler 320 schedules the requests received from priority select multiplexer 420 of Figure 5 onto memory bus 106 of Figure 8. Scheduler 320 comprises three queues coupled to a priority multiplexer 840. The three queues are: a pre-charge queue (PQ) 820, an activate queue (AQ) 810 and a read/write queue (RWQ) 830. Scheduler 320 may be configured to provide PQ 820 with the highest priority followed by AQ 810 followed by RWQ 830.

A request to initiate an OP cycle is loaded into PQ 820. A request to initiate an activation cycle is loaded into AQ 810. A request to initiate a read/write cycle is loaded into RWQ 830. It is important to note that in one particular embodiment, the size of AQ 810 and PQ 820 is one deep. The size of RWQ 830 is 3 deep. The depth of one forces scheduler to accept the next request at the latest possible time before the last request is finished processing and memory bus 106 becomes idle. Waiting until the latest possible time to accept the next request from arbiter 310 of Figure 5 gives arbiter 310 the opportunity to examine more requests, thereby increasing the probability that a PH or PMb request will be presented. It is noted however, that the size of the queues in scheduler 320 of Figure 8 may be varied in different embodiments.

In reference to the description of Figure 1, each bank of SDRAM module 16A-C includes a plurality of pages that are accessed by a particular memory access address. Depending on the particular type of request received by arbiter 310 of Figure 4, one or more cycles will be initiated by scheduler 320 of Figure 8 to access the requested page. For example, when scheduler 320 receives a PH request, a request to initiate a read/write cycle is loaded in RWQ 830 of Figure 8. Hence only a read/write cycle will be initiated by scheduler 320 to read from or write to the address location. When scheduler 320 receives a PMb request, a request to initiate both an activation cycle and a read/write cycle will be loaded in AQ 810 and RWQ 830, respectively. Since AQ 810 has a higher priority than RWQ 830, the activation cycle will be initiated before the read/write cycle. When scheduler 320 receives a PMc request, a request to initiate an activation cycle and a read/write cycle will also be loaded in activate queue 810 and read/write queue 830, respectively. After the one cycle turnaround bubble described in the description of Figure 1, scheduler 320 of Figure 8 will initiate an activation cycle followed by a read/write cycle.

If scheduler 320 receives a PC request, a request to initiate a precharge cycle, an activation cycle and a read/write cycle will be loaded in PQ 820, AQ 820 and RWQ 830 respectively. Since PQ 820 has the highest priority, the precharge cycle will execute first, then the activation cycle followed by the read/write cycle. However, since PC requests typically offer the worst latency, a PC request may be converted to an OP request followed by a PMb request This allows more optimal requests that are received later than the PC to be interleaved between the OP and the PMb.

If scheduler 320 receives a BYP request, conceptually this would be a PMc request. However, it is treated as a PMb request since by definition there are no active chip selects. Scheduler 320 may therefore pass this request through AQ 820 to memory bus 106 in one cycle.

In addition to scheduling and optimizing events on memory bus 106, scheduler 320 may also be configured to control various other SDRAM related activities including: refresh cycles to the SDRAM, initialization and configuration of the SDRAM out of reset and power up and power down of the SDRAM.

Although the system and method of the present invention is described in connection with several embodiments, it is not intended to be limited to the specific forms set forth herein, but on the contrary, it is intended to cover such alternatives, modifications, and equivalents, as can be reasonably included within the spirit and scope of the invention as defined by the appended claims.

### INDUSTRIAL APPLICABILITY

This invention is applicable to computer systems.

## Claims

1. A bus bridge (102) comprising:
a memory controller (210) for controlling accesses to a memory (104);
a processor bus interface (204) coupled to said memory controller (210), wherein said processor bus interface (204) provides an interface between said memory controller (210) and a processor (101);
a first peripheral bus interface (212) coupled to said memory controller (210), wherein said first peripheral bus interface provides an interface between said memory controller (210) and a first peripheral bus (114);
wherein said memory controller (210) is configured to accept and arbitrate a plurality of incoming requests from said processor bus interface (204) and said first peripheral bus interface (212), **characterised in that** said memory controller (210) categorizes said plurality of incoming requests into a page hit request, a page miss bank request and a page miss-different chip select request, wherein said memory controller (210) is configured to provide said page hit request with a higher arbitration priority than said page miss bank request, and wherein said memory controller (210) is configured to provide said page miss bank request with a higher arbitration priority than said page miss-different chip select request.

2. The bus bridge (102) as recited in claim 1, wherein said memory (104) is coupled to said bus bridge (102) through a memory bus (106), wherein said memory bus (106) is a synchronous dynamic random access memory bus.

3. The bus bridge (102) as recited in claim 1, wherein said memory controller (210) comprises:
an arbiter (310) which is configured to arbitrate between said incoming requests, wherein said arbiter (310) comprises a plurality of categorizing multiplexers (410) configured to categorize said plurality of incoming requests.

4. The bus bridge (102) as recited in claim 3, wherein each one of said plurality of categorizing multiplexers (410) is a multiplexing unit, wherein each multiplexing unit comprises a plurality of multiplexers (610-650) which are configured to select one request from said plurality of incoming requests.

5. The bus bridge (102) as recited in claim 4, wherein said arbiter (310) further comprises:
a priority select multiplexer unit (420) coupled to receive a plurality of categorized incoming requests from said plurality of categorizing multiplexers, wherein said priority select multiplexer unit (420) is configured to select a priority request to be scheduled based on a fixed priority, wherein said priority select multiplexer unit (420) comprises a plurality of multiplexers (710-790).

6. The bus bridge (102) as recited in claim 5, wherein said memory controller (210) further comprises:
a scheduler (320) coupled to receive said priority request selected by said priority select multiplexer unit (420), wherein said scheduler (320) is configured to schedule said priority request onto said synchronous dynamic random access memory bus, wherein said scheduler comprises a pre-charge queue (820), an activate queue (810), and a read/write queue (830), wherein a precharge cycle is loaded into said pre-charge queue, wherein an activation cycle is loaded into said activate queue, wherein a read/write cycle is loaded into said read/write queue.

7. The bus bridge (102) as recited in claim 1, wherein said memory controller (210) is further configured to categorize said plurality of incoming requests into a page conflict request, wherein said memory controller (210) is configured to provide said miss bank-different chip select request with a higher arbitration priority than said page conflict request.

8. The bus bridge (102) as recited in claim 7, wherein said plurality of incoming requests comprises:
at least one request from said processor bus interface (204);
at least one request from said first peripheral bus interface (212);
at least one request from said second peripheral bus interface (214); and
at least one request from a graphics address remapping table (GART) table walk (330).

9. A method of operating a memory controller (210) comprising:
receiving incoming requests from a processor bus interface (204), and a first peripheral bus interface (212);
categorizing said incoming requests into a plurality of categories, wherein said plurality of categories comprise a page hit request, a page miss bank request, and a page miss-different chip select request;
prioritizing among said incoming requests, wherein said page hit request receives a higher arbitration priority than said page miss bank request, wherein said page miss bank request receives a higher arbitration priority than said page miss-different chip select request.

10. A computer system comprising:
a microprocessor (101) coupled to a processor bus interface (204), wherein said microprocessor (101) generates one or more requests;
a main memory (104) coupled to a memory bus interface;
a bus bridge (102) coupled to provide an interface between said processor bus interface (204), said memory bus interface, a first peripheral bus interface (212), and a second peripheral bus interface (214), wherein said first peripheral bus interface (212) generates at least one request, wherein said second peripheral bus interface (214) generates at least one request;
wherein said bus bridge (102) comprises a memory controller (210), wherein said memory controller (210) is configured to accept and arbitrate a plurality of incoming requests from said processor bus interface (204), said first peripheral bus interface (212) and said second peripheral bus interface (214), **characterised in that** said memory controller (210) categorizes said plurality of incoming requests into a page hit request, a page miss bank request and a page miss-different chip select request, wherein said memory controller (210) is configured to provide said page hit request with a higher arbitration priority than said page miss bank request, wherein said memory controller (210) is configured to provide said page miss bank request with a higher arbitration priority than said page miss-different chip select request.

## Patentansprüche

1. Bus-Brücke (102) mit:
einem Speicher-Controller (210) zum Steuern von Zugriffen auf einen Speicher (104);
einem mit dem Speicher-Controller (210) verbundenen Prozessor-Bus-Interface (204), das ein Interface zwischen dem Speicher-Controller (210) und einem Prozessor (101) bildet;
einem mit dem Speicher-Controller (210) verbundenen ersten Peripherie-Bus-Interface (212), das ein Interface zwischen dem Speicher-Controller (210) und einem ersten Peripherie-Bus (114) bildet;
wobei der Speicher-Controller (210) zum Akzeptieren und Arbitrieren mehrerer eintreffender Anfragen aus dem Prozessor-Bus-Interface (204) und dem ersten Peripherie-Bus-Interface (212) konfiguriert ist;
**dadurch gekennzeichnet, dass** der Speicher-Controller (210) die mehreren eintreffenden Anfragen kategorisiert in eine Speicherseiten-Treffer-Anfrage, eine Speicherseiten-Fehl-Anfrage und eine Speicherseiten-Fehl-Anfrage mit Wahl eines anderen Chips, wobei der Speicher-Controller (210) zum Erzeugen der Speicherseiten-Treffer-Anfrage mit höherer Arbitrierungs-Priorität als die Speicherseiten-Fehl-Anfrage konfiguriert ist, und wobei der Speicher-Controller (210) zum Erzeugen der Speicherseiten-Fehl-Anfrage mit höherer Arbitrierungs-Priorität als die Speicherseiten-Fehl-Anfrage mit Wahl eines anderen Chips konfiguriert ist.

2. Bus-Brücke (102) nach Anspruch 1, bei der der Speicher (104) über einen Speicher-Bus (106) mit der Bus-Brücke (102) verbunden ist, wobei der Speicher-Bus (106) ein synchroner dynamischer RAM-Bus ist.

3. Bus-Brücke (102) nach Anspruch 1, bei der der Speicher-Controller (210) aufweist:
einen Arbiter (310), der zum Arbitrieren zwischen eintreffenden Anfragen konfiguriert ist, wobei der Arbiter (310) mehrere Kategorisierungs-Multiplexer (410) aufweist, die zum Kategorisieren der mehreren eintreffenden Anfragen konfiguriert sind.

4. Bus-Brücke (102) nach Anspruch 3, bei der jeder der mehreren Kategorisierungs-Multiplexer (410) eine Multiplex-Einheit ist, von denen jede mehrere Multiplexer (610-650) aufweist, die zum Wählen einer Anfrage aus den mehreren eintreffenden Anfragen konfiguriert sind.

5. Bus-Brücke (102) nach Anspruch 4, bei der der Arbiter (310) ferner aufweist:
eine Prioritätswahl-Multiplexereinheit (420), die zum Empfangen mehrerer kategorisierter eintreffender Anfragen aus den mehreren Kategorisierungs-Multiplexern angeordnet ist, wobei die Prioritätswahl-Multiplexereinheit (420) zum Wählen eines Prioritäts-Anfrage konfiguriert ist, die basierend auf einer festen Priorität eingeplant werden soll, und wobei die Prioritätswahl-Multiplexereinheit (420) mehrere Multiplexer (710-790) aufweist.

6. Bus-Brücke (102) nach Anspruch 5, bei der der Speicher-Controller (210) ferner aufweist:
einen Planer (320), der zum Empfang der von der Prioritätswahl-Multiplexereinheit (420) gewählten Prioritäts-Anfrage gewählt ist, wobei der Planer (320) zum planmäßigen Aufgeben der Prioritäts-Anfrage auf den synchronen dynamischen RAM-Bus konfiguriert ist, wobei der Planer eine Vorlade-Warteschlange (820), eine Aktivierungs-Warteschlange (810) und eine Lese-/Schreib-Warteschlange (830) aufweist, wobei ein Vorlade-Zykls in die Vorlade-Warteschlange geladen wird, ein Aktivierungs-Zyklus in die Aktivierungs-warteschlange geladen wird und ein Lese-/Schreib-Zyklus in die Lese-/Schreib-Warteschlange geladen wird.

7. Bus-Brücke (102) nach Anspruch 1, bei der der Speicher-Controller (210) ferner konfiguriert ist zum Kategorisieren der mehreren eintreffenden Anfragen in eine Seiten-Konflikt-Anfrage, wobei der Speicher-Controller (210) konfiguriert ist zum Ausgeben der Speicherseiten-Fehl-Anfrage mit Wahl eines anderen Chips mit höherer Arbitrierungs-Priorität als die Seiten-Konflikt-Anfrage.

8. Bus-Brücke (102) nach Anspruch 7, bei der die mehreren eintreffenden Anfragen aufweisen:
mindestens eine Anfrage von dem Prozessor-Bus-Interface (204);
mindestens eine Anfrage von dem ersten Peripherie-Bus-Interface (212);
mindestens eine Anfrage von dem zweiten Peripherie-Bus-Interface (214); und
mindestens eine Anfrage von einem Graphik-Adress-Wiederabbildungs-Tabellen-(GART-)Tabellen-Durchlauf (330).

9. Verfahren zum Betreiben eines Speicher-Controllers (210), mit folgenden Schritten:
Empfangen eintreffender Anfragen von einem Prozessor-Bus-Interface (204) und einem ersten Peripherie-Bus-Interface (212);
Kategorisieren der eintreffenden Anfragen in mehrere Kategorien, wobei die mehreren Kategorien eine Speicherseiten-Treffer-Anfrage, eine Speicherseiten-Fehl-Anfrage und eine Speicherseiten-Fehl-Anfrage mit Wahl eines anderen Chips aufweisen;
Prioritisieren unter den eintreffenden Anfragen, wobei die Speicherseiten-Treffer-Anfrage eine höhere Arbitrierungs-Priorität erhält als die Speicherseiten-Fehlanfrage, und die Speicherseiten-Fehl-Anfrage eine höhere Arbitrierungs-Priorität erhält als die Speicherseiten-Fehl-Anfrage mit Wahl eines anderen Chips.

10. Computersystem mit:
einem mit einem Prozessor-Bus-Interface (204) verbundenen Mikroprozessor (101), der ein oder mehrere Anfragen erzeugt;
einem mit einem Speicher-Bus-Interface verbundenen Hauptspeicher (104);
einer Bus-Brücke (102), die angeordnet ist zur Bildung eines Interface zwischen dem Prozessor-Bus-Interface (204) dem Speicher-Bus-Interface, einem ersten Peripherie-Bus-Interface (212) und einem zweiten Peripherie-Bus-Interface (214), wobei das erste Peripherie-Bus-Interface (212) und das zweite Peripherie-Bus-Interface (214) jeweils mindestens eine Anfrage erzeugen,
wobei die Bus-Brücke (102) einen Speicher-Controller (210) aufweist, wobei der Speicher-Controller (210) zum Akzeptieren und Arbitrieren mehrerer eintreffender Anfragen aus dem Prozessor-Bus-Interface (204), dem ersten Peripherie-Bus-Interface (212) und dem zweiten Peripherie-Bus-Interface (214) konfiguriert ist; **dadurch gekennzeichnet, dass** der Speicher-Controller (210) die mehreren eintreffenden Anfragen kategorisiert in eine Speicherseiten-Treffer-Anfrage, eine Speicherseiten-Fehl-Anfrage und eine Speicherseiten-Fehl-Anfrage mit Wahl eines anderen Chips, wobei der Speicher-Controller (210) zum Erzeugen der Speicherseiten-Treffer-Anfrage mit höherer Arbitrierungs-Priorität als die Speicherseiten-Fehl-Anfrage konfiguriert ist, und wobei der Speicher-Controller (210) zum Erzeugen der Speicherseiten-Fehl-Anfrage mit höherer Arbitrierungs-Priorität als die Speicherseiten-Fehl-Anfrage mit Wahl eines anderen Chips konfiguriert ist.

## Revendications

1. Pont de bus (102) comprenant :
un contrôleur de mémoire (210) servant à contrôler des accès à une mémoire (104);
une interface de bus de processeur (204) couplée audit contrôleur de mémoire (210), ladite interface de bus de processeur (204) fournissant une interface entre ledit contrôleur de mémoire (210) et un processeur (101) ;
une interface de premier bus périphérique (212) couplée audit contrôleur de mémoire (210), ladite interface de premier bus périphérique fournissant une interface entre ledit contrôleur de mémoire (210) et un premier bus périphérique (114) ;
dans lequel ledit contrôleur de mémoire (210) est configuré pour recevoir et arbitrer une pluralité de requêtes entrantes provenant de ladite interface de bus de processeur (204) et de ladite interface de premier bus périphérique (212), **caractérisé en ce que** ledit contrôleur de mémoire (210) classe par catégorie ladite pluralité de requêtes entrantes en requête de renvoi de page, requête de bloc sans page active et requête de sélection de circuit différent et sans page active, dans lequel le contrôleur de mémoire (210) est configuré pour fournir ladite requête de renvoi de page avec une priorité d'arbitrage plus haute que ladite requête de bloc sans page active, et dans lequel ledit contrôleur de mémoire (210) est configuré pour fournir ladite requête de bloc sans page active avec une priorité plus haute que ladite requête de sélection de circuit différent et sans page active.

2. Pont de bus (102) selon la revendication 1, dans lequel ladite mémoire (104) est couplée audit pont de bus (102) par un bus de mémoire (106), ledit bus de mémoire (106) étant un bus de mémoire vive dynamique synchrone.

3. Pont de bus (102) selon la revendication 1, dans lequel ledit contrôleur de mémoire (210) comprend :
un dispositif d'arbitrage (310) qui est configuré pour arbitrer entre lesdites requêtes entrantes, ledit arbitre (310) comprenant une pluralité de multiplexeurs de classement par catégorie (410) configurés pour classer par catégorie ladite pluralité de requêtes entrantes.

4. Pont de bus (102) selon la revendication 3, dans lequel chaque multiplexeur de ladite pluralité de multiplexeurs de classement par catégorie (410) est une unité de multiplexage, chaque unité de multiplexage comprenant une pluralité de multiplexeurs (610-650) qui sont configurés pour sélectionner une requête à partir de ladite pluralité de requêtes entrantes.

5. Pont de bus (102) selon la revendication 4, dans lequel ledit dispositif d'arbitrage (310) comprend, de plus :
une unité de multiplexeur de sélection de priorité (420) couplée pour recevoir une pluralité de requêtes entrantes classées par catégorie à partir de ladite pluralité de multiplexeurs de classement par catégorie, ladite unité de multiplexeur de sélection de priorité (420) est configurée pour sélectionner une requête de priorité à programmer sur la base d'une priorité fixée, ladite unité de multiplexeur de sélection de priorité (420) comprenant une pluralité de multiplexeurs (710-790).

6. Pont de bus (102) selon la revendication 5, dans lequel ledit contrôleur de mémoire (210) comprend, de plus :
un programmateur (320) couplé pour recevoir ladite requête de priorité sélectionnée par ladite unité de multiplexeur de sélection de priorité (420), ledit programmateur (320) étant configuré pour programmer ladite requête de priorité sur ledit bus de mémoire vive dynamique synchrone, ledit programmateur comprenant une file d'attente de pré-chargement (820), une file d'attente d'activation (810), et une file d'attente de lecture/écriture (830), dans lequel un cycle de pré-chargement est chargé dans ladite file d'attente de pré-chargement, dans lequel un cycle active est chargé dans ladite file d'attente active, dans lequel un cycle de lecture/écriture est chargé dans la file d'attente de lecture/écriture.

7. Pont de bus (102) selon la revendication 1, dans lequel ledit contrôleur de mémoire (210) est configuré, de plus, pour classer par catégorie ladite pluralité de requêtes entrantes en une requête de conflit de page, dans lequel ledit contrôleur de mémoire (210) est configuré pour fournir ladite requête de sélection de circuit différent et sans bloc actif avec une priorité d'arbitrage plus haute que ladite requête de conflit de page.

8. Pont de bus (102) selon la revendication 7, dans lequel ladite pluralité de requêtes entrantes comprend :
au moins une requête provenant de ladite interface de bus de processeur (204) ;
au moins une requête provenant de ladite interface de premier bus périphérique (212) ;
au moins une requête provenant de ladite interface de second bus périphérique (214) ; et
au moins une requête provenant d'un déplacement de table (330) d'une reconversion d'adresse graphique (GART).

9. Procédé de fonctionnement d'un contrôleur de mémoire (210) consistant à :
recevoir des requêtes entrantes provenant d'une interface de bus de processeur (204), et d'une interface d'un premier bus périphérique (212) ;
classer par catégorie lesdites requêtes entrantes en une pluralité de catégories, dans lequel ladite pluralité de catégories comprend une requête de renvoi de page, une requête de bloc sans page active , et une requête de sélection de circuit différent et sans page active ;
attribuer une priorité aux dites requêtes entrantes, ladite requête de renvoi de page recevant une priorité d'arbitrage plus haute que ladite requête de bloc sans page active, ladite requête de bloc dans page active recevant une priorité d'arbitrage plus haute que ladite requête de sélection de circuit différent et sans page active.

10. Système d'ordinateur comprenant:
un microprocesseur (101) couplé à une interface de bus de processeur (204), dans lequel ledit microprocesseur (101) génère une ou plusieurs requêtes ;
une mémoire principale (104) couplée à une interface de bus de mémoire ;
un pont de bus (102) couplé pour fournir une interface entre ladite interface de bus de processeur (204), ladite interface de bus de mémoire, une interface de premier bus périphérique (212), et une interface de second bus périphérique (214), dans lequel ladite interface de premier bus périphérique (212) génère au moins une requête, dans lequel ladite interface de second bus périphérique (214) génère au moins une requête ;
dans lequel ledit pont de bus (102) comprend un contrôleur de mémoire (210), dans lequel ledit contrôleur de mémoire (210) est configuré pour accepter et arbitrer une pluralité de requêtes entrantes venant de ladite interface de bus de processeur (204), de ladite interface de premier bus périphérique (212) et de ladite interface de second bus périphérique (214), **caractérisé en ce que** ledit contrôleur de mémoire (210) classe par catégorie ladite pluralité de requêtes entrantes en requête de renvoi de page, requête de bloc sans page active et requête de sélection de circuit différent et sans page active, dans lequel ledit contrôleur de mémoire (210) est configuré pour fournir ladite requête de renvoi de page avec une priorité d'arbitrage plus haute que ladite requête de bloc sans page active, dans lequel ledit contrôleur de mémoire (210) est configuré pour fournir ladite requête de bloc sans page active avec une priorité d'arbitrage plus haute que ladite requête de sélection de circuit différent et sans page active.
